# EUROPÄISCHE PATENTSCHRIFT

(11) **EP 1 637 749 B1**
(45) Veröffentlichungstag und Bekanntmachung des Hinweises auf die Patenterteilung: **19.03.2008**
(21) Anmeldenummer: 05405539.7
(22) Anmeldetag: 13.09.2005
(51) Int. Cl.: F16B 37/00, F16B 5/02

(54) **Verbindungsvorrichtung mit einer Schraube**
Fastening device with a screw
Dispositif de fixation avec vis

(30) Priorität: 17.09.2004 CH 15272004
(43) Veröffentlichungstag der Anmeldung: 22.03.2006
(73) Patentinhaber: ZURECON AG, CH-8003 Zürich (CH)
(72) Erfinder: Pfluger, Gerd, 4625 Oberbuchsiten (CH)
(74) Vertreter: Rutz, Peter

(56) Entgegenhaltungen:
- EP-A- 0 551 836
- DE-C- 19 507 715
- FR-A- 2 587 067

## Beschreibung

Die Erfindung betrifft eine Vorrichtung, die dem Verbinden von zwei Teilen, insbesondere einer Kabelführungsvorrichtung und einer Längsöffnung dafür vorgesehenen Tragvorrichtung, von denen wenigstens ein Teil eine Längsöffnung aufweist, dient, mit einer der Durchführung durch die Längsöffnung geeigneten Verbindungsschraube nach dem Oberbegriff des Patentanspruchs 1.

Eine solche Vorrichtung ist z.B. aus der FR 2 587 067 A bekannt.

Im Stahlbau werden für das Verbinden von Metallteilen vorzugsweise Verbindungsvorrichtungen bzw. Schraubengarnituren verwendet, wie sie in [1], Produktkatalog der LANZ OENSINGEN AG, April 2003, auf den Seiten 68-69 gezeigt sind.

Oft sind die zu verbindenden Teile mit Längsöffnungen mit einem kleineren Querdurchmesser und einen grösseren Längsdurchmesser versehen, die erlauben, eine Verbindungsschraube hindurch zu führen und die miteinander verbundenen Teile, vor dem Festziehen der Verbindungsschraube, entsprechend der Länge des Längsdurchmessers der Längsöffnung bzw. der Längsöffnungen gegeneinander zu verschieben, um eine passende gegenseitige Lage der Teile einzustellen. Damit der Kopf der Verbindungsschraube jedoch nicht durch die Längsöffnung hindurch rutschen kann, ist der Gewindedurchmesser der Verbindungsschraube meist entsprechend dem Querdurchmesser der Längsöffnung gewählt. Der Schraubenkopf und gegebenenfalls eine daran anliegende Funktionsplatte, beispielsweise eine Unterlagsscheibe oder eine Stahl-Kralle (siehe [1], Seite 67), überlappen daher die Längsöffnung und sind dadurch stabil gehalten.

Sofern der Querdurchmesser einer Längsöffnung, beispielsweise einer Nut, gross genug ist, kann auch die in [1], Seite 69 gezeigte Nutenstein-Garnitur verwendet werden, die aus einer Schraube und einem relativ breiten Nutenstein besteht, der eine vollständig durch diesen hindurchgeführte Gewindebohrung aufweist. Insbesondere bei Kabelführungsvorrichtungen, wie Kabelbahnen oder Kabelkanälen, die zum Tragen schwerer Lasten dienen, werden der Querdurchmesser der Längsöffnung und der Gewindedurchmesser der Verbindungsschraube jedoch meist derart gewählt, dass letztere nach dem Einführen in der Längsöffnung in Querrichtung praktisch spielfrei gehalten ist.

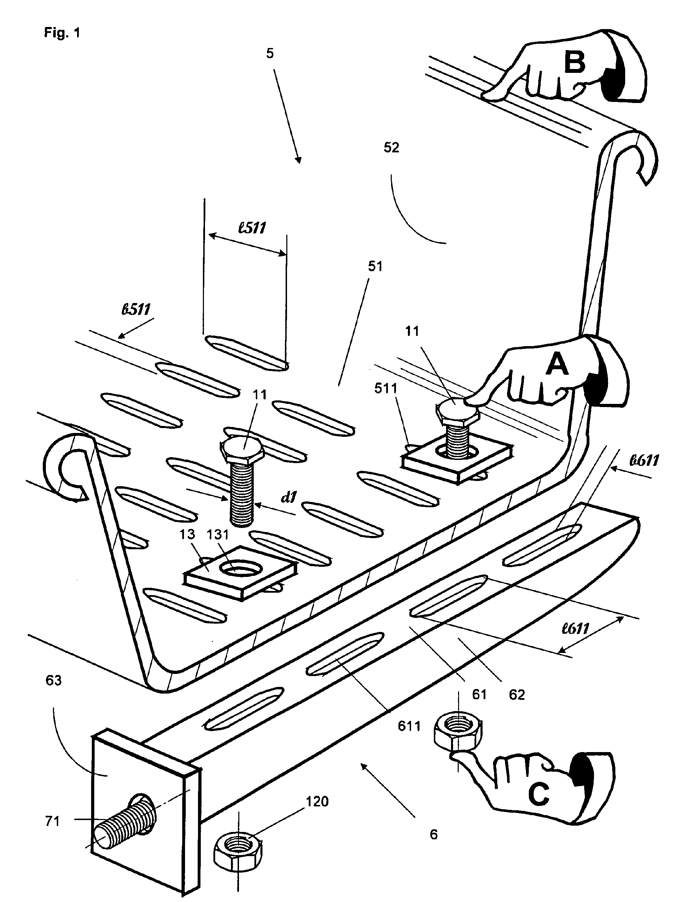

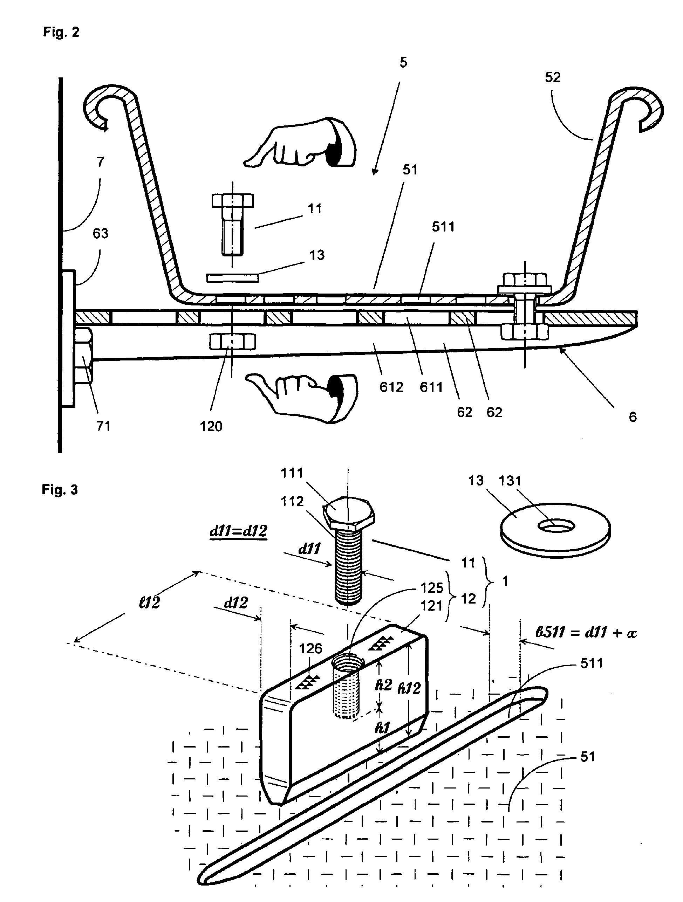

Die Figuren 1 und 2 zeigen einen beispielsweise aus [1], Seite 49 bekannten, mit Längsschlitzen 51 versehenen Kabelkanal 5, welcher zwei durch ein Basisteil 51 miteinander verbundene Seitenwände 52 aufweist. Das Basisteil 51 ist mit der Durchführung von Verbindungsschrauben 11 dienenden Längsöffnungen 511 versehen, die einen grösseren Längsdurchmesser 1511 und einen kleineren Querdurchmesser b511 aufweisen, der dem Gewindedurchmesser d11 der Verbindungsschrauben 11 entspricht. Wie in den Figuren 1 und 2 weiter gezeigt, werden derartige Kabelkanäle 5 auf einer Tragvorrichtung, vorzugsweise auf einem Ausleger 6 abgelegt und mit diesem verbunden. Derartige Ausleger 6, die beispielsweise an einer Gebäudewand oder an einer Deckenstütze 7 (siehe Figur 2) montiert werden, sind in [1], Seiten 28 und 40 gezeigt. Der in Figur 1 dargestellte Ausleger 6 weist eine mit den Längslochungen 611 versehene Tragplatte 61, eine senkrecht dazu stehende Stabilisierungsrippe 62 und eine Montageplatte 63 auf, die mittels einer Montageschraube 71 mit der Wand oder der Deckenstütze 7 verbunden wird.

Zur Befestigung des Kabelkanals 5 wird die Verbindungsschraube 11 in einem ersten Schritt A (siehe Figur 1) durch die Öffnung 131 einer Funktionsplatte 13, durch eine Längsöffnung 511 des Kabelkanals 5 und weiter durch eine Längsöffnung 611 des Auslegers 6 geführt, deren Abmessungen 1611 und b611 im vorliegenden Fall etwa den Abmessungen 1511 und b511 der Längsöffnungen 511 des Kabelkanals 5 entsprechen. Sofern die Längsöffnungen 511, 611 des Kabelkanals 5 und des Auslegers 6 nicht präzise übereinander liegen, ist in einem zweiten Schritt B der Kabelkanal 5 in Längs- und Querrichtung zu verschieben. In einem dritten Schritt C wird eine Schraubenmutter 120 von unten gegen die eingesetzte Verbindungsschraube 11 geführt und auf deren Gewinde gedreht, während die Verbindungsschraube 11 noch immer von oben gehalten wird. Der Installateur, der normalerweise auf einer Leiter oder einer Hebebühne steht, montiert daher Schraube 11 und Schraubenmutter 120 mit beiden Händen (so genannte Zweihandmontage) und muss gegebenenfalls noch gegen den Kabelkanal 5 drücken, um diesen korrekt zu positionieren.

Da Kabelführungsvorrichtungen in der Peripherie eines Raumes, normalerweise im Deckenbereich, verlegt werden, gestaltet sich die Installation meist relativ aufwendig. Der Monteur, der auf einer Leiter oder Hebebühne steht, muss darauf achten, dass seine Sicherheit während dem Anbringen der Verbindungsvorrichtung gewährleistet bleibt, was aufgrund der durchzuführenden Zweihandmontage oft mit Schwierigkeiten verbunden ist.

Besonderes wesentlich ist ferner, dass die Ausleger derart auszugestalten sind, dass sie die Zuführung des notwendigen Verbindungsteils, beispielsweise der Schraubenmutter erlauben. Dabei resultieren unerwünschte Einschränkungen bei der Ausgestaltung der Ausleger.

Der vorliegenden Erfindung liegt daher die Aufgabe zugrunde, eine verbesserte Verbindungsvorrichtung der eingangs genannten Art zu schaffen.

Insbesondere ist eine zum einfachen, rationellen und sicheren Verbinden von zwei Teilen, insbesondere einer Kabelführungsvorrichtung und einer dafür vorgesehenen Tragvorrichtung, geeignete Verbindungsvorrichtung zu schaffen, die eine durch eine Längsöffnung in wenigstens einem der Teile hindurch zu führende Verbindungsschraube aufweist, deren Gewindedurchmesser etwa dem Querdurchmesser der Längsöffnung entspricht.

Diese Aufgabe wird mit einer Verbindungsvorrichtung gelöst, welche die in Anspruch 1 angegebenen Merkmale aufweist. Vorteilhafte Ausgestaltungen der Erfindung sind in weiteren Ansprüchen angegeben.

Die Vorrichtung dient, die dem Verbinden eines ersten und eines zweiten Teils, insbesondere einer Kabelführungsvorrichtung und einer dafür vorgesehenen Tragvorrichtung, von denen wenigstens ein Teil eine Längsöffnung aufweist, dient, mit einer der Durchführung durch die Längsöffnung geeigneten Verbidungsschraube, die derart in eine Gewindebohrung eines Halteelements einführbar ist, dass die beiden Teile zwischen dem Kopf der Verbindungsschraube und dem Halteelement fixierbar sind.

Erfindungsgemäss weist das durch die Längsöffnung des ersten und/oder zweiten Teils hindurch führbare Halteelement einen Körper auf, dessen Querdurchmesser etwa dem Gewindedurchmesser der Verbindungsschraube entspricht oder kleiner ist und der von der Gewindebohrung nicht vollständig durchstossen ist, so dass der Körper des Halteelements in zwei durch die Gewindebohrung zumindest teilweise voneinander getrennte und unterhalb der Gewindebohrung durch ein Mittelstück miteinander verbundene Seitenstücke aufgeteilt ist.

Die Abmessungen des Mittelstücks sind dabei derart gewählt, dass dieses die Seitenstücke auch unter Belastung parallel ausgerichtet hält. Die Verbindungsschraube wird daher in der Gewindebohrung stabil gehalten, auch wenn das Gewinde nur in die Seitenstücke eingreift und auf zwei Seiten gegebenenfalls frei liegt.

Zur Verbindung der beiden Teile wird das mittels der Verbindungsschraube gehaltene, vorzugsweise quaderförmig oder unten keilförmig ausgestaltete Halteelement aus einer Richtung, von oben oder von unten, durch die Längsöffnung des ersten und/oder des zweiten Teils hindurch geführt und anschliessend vorzugsweise bis zu einem Abschlag gedreht oder manuell gehalten und anschliessend festgezogen. Die Manipulationen zur Durchführung der Verbindungsschraube und des Halteelements durch die Längsöffnungen erfolgen daher stets aus einer Richtung, beispielsweise von oben, was bequem durchführbar ist. Nur falls das zweite Teil keinen Anschlag aufweist, muss das Halteelement manuell gehalten werden, was jedoch, im Gegensatz zum präzisen Positionieren und Halten einer Schraubenmutter, leicht möglich ist. Die mit der Gewindebohrung versehene Seite des Halteelements, die nach der Installation am zweiten Teil anliegt, ist vorzugsweise aufgeraut oder mit Spitzen oder Haken versehen, so dass nach dem Festziehen der Verbindungsschraube eine formschlüssige Verbindung zwischen dem Halteelement und dem zweiten Teil entsteht.

Besonders vorteilhaft ist ferner, dass das zweite Teil, beispielsweise ein Ausleger, nun freier ausgestaltet werden kann, da kein weiteres Verbindungsteil, eine Schraubenmutter oder dergleichen, mehr zugeführt werden muss, um die Verbindung zu realisieren. Das zweite Teil bzw. der Ausleger kann daher auch ein langschenkliges U-Profil oder ein geschlossenes Vierkant-Profil aufweisen, das die Zuführung einer Schraubenmutter nicht erlaubt.

Nachfolgend wird die Erfindung anhand von Zeichnungen näher erläutert. Dabei zeigt:
- Figur 1: einen in Schnittdarstellung gezeigten, mit Längsöffnungen 511 versehenen Kabelkanal 5 und eine mit Längsöffnungen 611 versehene Tragvorrichtung 6, die mittel einer aus [1] bekannten Schraubengarnitur miteinander verbunden werden;
- Figur 2: den Kabelkanal 5 und die Tragvorrichtung 6 von Figur 1 von vorn gesehen;
- Figur 3: eine erfindungsgemässe Verbindungsvorrichtung 1, die aus einer Verbindungsschraube 11 und einem quaderförmigen Halteelement 12 besteht;
- Figur 4: die Manipulationen zur Durchführung des Halteelements 12 durch die senkrecht zueinander liegenden Längsöffnungen 511, 611 des ersten und zweiten Teils; und
- Figur 5: das Drehen und Festziehen des Halteelements 12.

Figur 1 und Figur 2 zeigen einen mit Längsöffnungen 511 versehenen Kabelkanal 5 und eine mit Längsöffnungen 611 versehene Tragvorrichtung 6 bzw. einen so genannten Ausleger. Wie eingangs beschrieben, und in den Figuren 1 und 2 gezeigt, werden diese beiden Teile 5, 6 üblicherweise mittels einer Verbindungsvorrichtung bzw. einer Schraubengarnitur 11, 120, 13 verbunden, welche aus einer Verbindungsschraube 11, einer Schraubenmutter 120 und einer mit einer Öffnung 131 versehenen Funktionsplatte 13, beispielsweise einer Unterlagsscheibe besteht. Wie beschrieben, erfordert das Anbringen der Schraubengarnitur 11, 120, 13 eine Zweihandmontage.

Figur 3 zeigt eine erfindungsgemässe, zum Verbinden von zwei Teilen 5, 6 geeignete Verbindungsvorrichtung 1. Diese Verbindungsvorrichtung 1 besteht aus einer Verbindungsschraube 11 mit einem Schraubenkopf 111 und einem Schraubengewinde 112 sowie einem Halteelement 12, das einen Körper 121 aufweist, in dem eine der Aufnahme der Verbindungsschraube 11 dienende Gewindebohrung 125 vorgesehen ist. Der Metallkörper 121 ist quaderförmig ausgestaltet und weist einen Längsdurchmesser 112, eine Breite bzw. einen Querdurchmesser d12 und die Höhe h12 auf. Ferner ist ein als Unterlagsscheibe ausgestaltetes Funktionselement 13 gezeigt, das eine Öffnung 131 aufweist, durch die das Gewinde 112 der Verbindungsschraube 11 durchführbar ist, so dass das Funktionselement 13 nach der Montage der Verbindungsvorrichtung 1 einerseits am Kopf 111 der Verbindungsschraube 11 und andererseits an einem der installierten Teile anliegt.

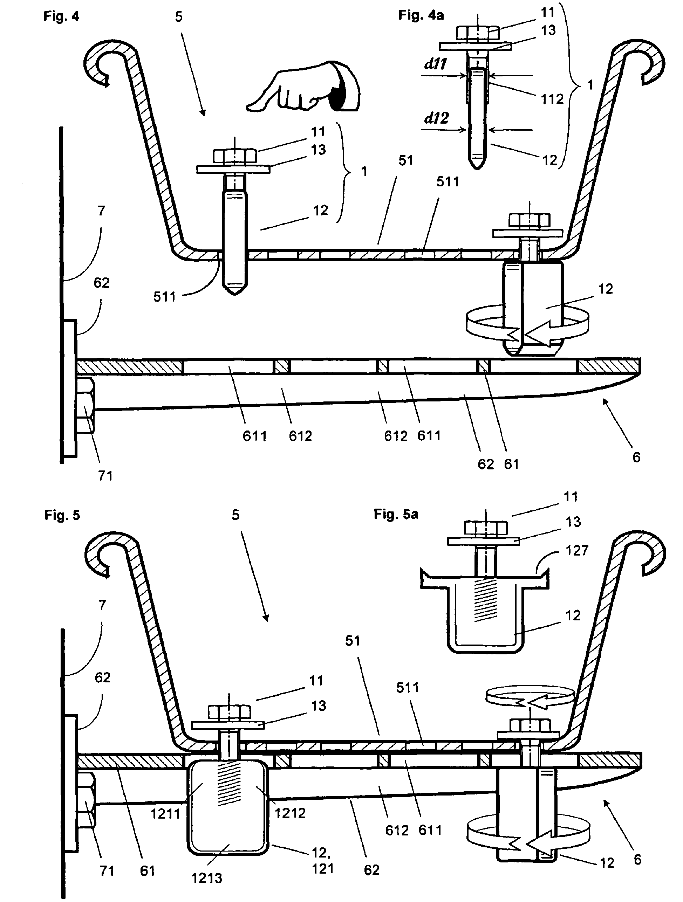

Ferner gezeigt ist eine Längsöffnung 511 im Basiselement 51 des Kabelkanals 5 von Figur 1, durch die das Halteelement 12 mit dem darin eingedrehten Gewinde 112 der Verbindungsschraube 11 hindurch führbar ist. Der Durchmesser d11 des Gewindes 112 der Verbindungsschraube 11 entspricht dabei etwa der Breite b511 der Längsöffnung 511, bzw. ist um das Mass x kleiner gewählt, so dass das Schraubengewinde 112 problemlos in die Längsöffnung 511 einführbar ist. Der Durchmesser d12 des Halteelements 12 entspricht ebenfalls dem Durchmesser d11 des Gewindes 112 der Verbindungsschraube 11, so dass auch das Halteelement 12 bequem und widerstandsfrei durch die Längsöffnung 511 hindurch geführt werden kann. Der Durchmesser d12 des Halteelements 12 kann auch kleiner als der Durchmesser d11 des Schraubengewindes 112 gewählt werden, so dass dieses, wie in Figur 4a gezeigt, seitlich aus dem Halteelement 12 hervor tritt.

Der Körper 121 des Halteelements 12 wird von der Gewindebohrung 125 nicht vollständig durchstossen, so dass dieser in zwei durch die Gewindebohrung 125 ganz oder teilweise voneinander getrennte und unterhalb der Gewindebohrung 125 durch ein Mittelstück 1213 miteinander verbundene Seitenstücke 1211, 1212 aufweist (siehe Figur 5). In Figur 3 sind die Höhe h1 des Mittelstücks 1213 und die Höhe h2 des Schraubengewindes 112 eingezeichnet, die addiert die Gesamthöhe h12 (h12 = h1 + h2) des Halteelement 12 ergeben. Die beiden Seitenstücke 1211, 1212 werden durch das entsprechend dimensionierte Mittelstück 1213 parallel zueinander ausgerichtet und stabil gehalten. Die in die Gewindebohrung 125 eingeführte Verbindungsschraube 11 wird daher auch unter Belastung zuverlässig gehalten. Der Längsdurchmesser 112 des Halteelements 12 ist vorzugsweise wenigstens doppelt so gross wie die Breite b511, b611 der Längsöffnungen 511, 611 der zu verbindenden Teile, z.B. des Kabelkanals 5 und des Auslegers 6, so dass dieses nach dem Durchführen durch die Längsöffnungen 511, 611 und anschliessendem Drehen unterhalb des Auslegers 6 und an diesem anliegend verankert ist.

Die Form des Körpers 121 des Halteelements 12 kann unter Berücksichtigung des minimal und maximal zulässigen Durchmessers d12 und der erforderlichen Dimensionierung des Mittelstücks 1213 frei gewählt werden. Vorzugsweise sind die seitlichen und unteren Kanten abgerundet, so dass das Halteelement 12 problemlos in eine Längsöffnung 511 eingeführt werden kann. Möglich ist auch die keilförmige Ausgestaltung des Halteelements 12, die eine weiter erleichterte Einführung des Halteelements 12 erlaubt. Zur sicheren Verankerung und Arretierung des Halteelements 12 weist dieses an der Oberseite vorzugsweise Spitzen 126 oder elastisch gehaltene Haken 127 auf, die beim Festziehen der Verbindungsschraube 11 formschlüssig in die Oberfläche des Auslegers 6 eindringen können (siehe Figur 3 und Figur 5a).

Die Figuren 4 und 5 zeigen die Montage der Verbindungsvorrichtung bzw. die Durchführung des Halteelements 12 durch die senkrecht zueinander liegenden Längsöffnungen 511, 611 des Kabelkanals 5 und des Auslegers 6. Zuerst wird das Halteelement 12 vollständig durch eine im Kabelkanal 5 vorgesehene Längsöffnung 511 hindurch geführt, anschliessend gedreht und dann durch eine Längsöffnung 611 im Ausleger 6 hindurch geführt. Anschliessend wird das Halteelement 12 weiter gedreht, bis es an der als Anschlag dienenden Stabilisierungsrippe 62 anschlägt, wonach die Verbindungsschraube 11 fest gezogen werden kann. Wo die Längsöffnungen 511, 611 des Kabelkanals 5 und des Auslegers 6 deckungsgleich übereinander liegen, vereinfacht sich die Montage, da das Halteelement 12 in einem Schritt durch beide Längsöffnungen 511, 611 geführt werden kann.

Die erfindungsgemässe Kabelführungsvorrichtung 1 wurde in bevorzugten Ausgestaltungen beschrieben und dargestellt. Anhand der erfindungsgemässen Lehre sind jedoch weitere fachmännische Ausgestaltungen realisierbar. Insbesondere kann das Halteelement 12 in verschiedenen Formen und mit verschiedenen Materialien, Metall oder Kunststoff, gefertigt werden. Ferner ist die erfindungsgemässe Verbindungsvorrichtung 1 auch vorteilhaft einsetzbar, falls nur eines der zu verbindenden Teile 5 oder 6 mit einer Längsöffnung 511 bzw. 611 versehen ist.

## Patentansprüche

1. Vorrichtung (1), die dem Verbinden eines ersten und eines zweiten Teils (5, 6), insbesondere einer Kabelführungsvorrichtung (5) und einer dafür vorgesehenen Tragvorrichtung (6), von denen wenigstens ein Teil (5, 6) eine Längsöffnung (511, 611) aufweist, dient,
mit einer der Durchführung durch die Längsöffnung (511, 611) geeigneten Verbindungsschraube (11), die derart in eine Gewindebohrung (125) eines Halteelements (12) einführbar ist, dass die beiden Teile (5, 6) zwischen dem Kopf (111) der Verbindungsschraube (11) und dem Halteelement (12) fixierbar sind, **dadurch gekennzeichnet, dass** das durch die Längsöffnung (511, 611) des ersten und/oder zweiten Teils (5, 6) hindurch führbare Halteelement (12) einen Körper (121) aufweist, dessen Querdurchmesser (d12) etwa dem Gewindedurchmesser (d11) der Verbindungsschraube (11) entspricht oder kleiner ist, und der von der Gewindebohrung (125) nicht vollständig durchstossen ist, so dass der Körper (121) in zwei durch die Gewindebohrung (125) zumindest teilweise voneinander getrennte und unterhalb der Gewindebohrung (125) durch ein Mittelstück (1213) miteinander verbundene Seitenstücke (1211, 1212) aufgeteilt ist.

2. Verbindungsvorrichtung (1) nach Anspruch 1, **dadurch gekennzeichnet, dass** der Körper (121) zumindest annähernd quaderförmig oder nach unten zumindest annähernd keilförmig ausgestaltet ist.

3. Verbindungsvorrichtung (1) nach Anspruch 1 oder 2, **dadurch gekennzeichnet, dass** der Körper (121) seitlich oder unten abgerundet ist.

4. Verbindungsvorrichtung (1) nach Anspruch 1, 2 oder 3, **dadurch gekennzeichnet, dass** die Höhe (h1) des Mittelstücks (1213) derart gewählt ist, dass die beiden Seitenstücke (1211, 1212) parallel zu einander gehalten sind.

5. Verbindungsvorrichtung (1) nach einem der Ansprüche 1 bis 4, **dadurch gekennzeichnet, dass** das Halteelement (12) einstückig aus Metall oder Kunststoff gefertigt ist.

6. Verbindungsvorrichtung (1) nach einem der Ansprüche 1 bis 5, **dadurch gekennzeichnet, dass** anliegend an den Kopf (111) der Verbindungsschraube (11) ein Funktionselement (13) mit einer Öffnung (131) vorgesehen ist, durch die die Gewindestange (112) der Verbindungsschraube (11) hindurch geführt ist.

7. Verbindungsvorrichtung (1) nach einem der Ansprüche 1 bis 6, **dadurch gekennzeichnet, dass** die mit der Gewindebohrung (125) versehene Seite des Halteelements (12) aufgeraut ist oder Spitzen (126) oder elastisch gehaltene Haken (127) aufweist.

## Claims

1. Device (1) serving for connecting a first and a second part (5, 6), particularly a cable guiding device (5) and a therefore dedicated mounting device (5), of which at least one part (5, 6) comprises a longitudinal opening (511, 611), with a connecting screw (11) suitable for entering the longitudinal opening (511, 611), which can be introduced into thread hole (125) of a holding element (12) in such a way that both parts (5, 6) can be fixed between the head (111) of the connecting screw (11) and the holding element (12), **characterised in that** the holding element (12), which is guidable through the longitudinal opening (511, 611) of the first or second part (5, 6), comprises a body (121), whose cross diameter (d12) corresponds approximately to or is smaller than the diameter (d11) of the thread of the connecting screw (11), and which is not completely crossed by the thread hole (125), so that the body (121) is partitioned in two side pieces (1211, 1212), which are at least partially separated from one another by the thread hole (125) and , are connected below the thread hole (125) with one another by a middle piece (1213).

2. Device (1) according to claim 1, **characterised in that** the body (121) has at least approximately the form of a cuboid or a wedge.

3. Device (1) according to claim 1 or 2, **characterised in that** the body (121) is rounded on the sides or below

4. Device (1) according to claim 1, 2 or 3, **characterised in that** the height (h1) of the middle piece (1213) is selected in such a way that both side pieces (1211, 1212) are held in parallel to one another.

5. Device (1) according to one of the claims 1 to 4, **characterised in that** the holding element (12) is made as one piece from metal or plastic.

6. Device (1) according to one of the claims 1 to 5, **characterised in that** adjacent to the head (111) of the connecting screw (11) a functional element (13) with an opening (131) is provided, through which the threaded shaft (112) of the connecting screw (11) can be guided.

7. Device (1) according to one of the claims 1 to 6, **characterised in that** the side of the holding element (12), which is provided with the thread hole (125), is roughened or comprises spikes (126) or elastically held hooks (127).

## Revendications

1. Dispositif (1), qui sert à relier une première partie et une seconde partie (5, 6), en particulier un dispositif de guidage de câble (5) et un dispositif porteur prévu à cet effet (6), dont au moins une partie (5, 6) présente une lumière (511, 611) avec une vis de connexion (11) appropriée pour le passage à travers la lumière (511, 611), vis qui peut être introduite dans un perçage fileté (125) d'un élément de retenue (12) de sorte que les deux parties (5, 6) peuvent être fixées entre la tête (111) de la vis de connexion (11) et l'élément de retenue (12), **caractérisé en ce que** l'élément de retenue (12) introduisible par la lumière (511, 611) de la première et/ou seconde partie (5, 6) présente un corps (121) dont le diamètre transversal (d12) est environ égal ou supérieur au diamètre de filetage (d11) de la vis de connexion (11) et qui n'est pas transpercé entièrement par le perçage fileté (125) de sorte que le corps (121) est divisé en deux pièces latérales (1211, 1212) reliée entre elles par une pièce médiane (1213) en dessous du perçage fileté (125) et séparées l'une de l'autre du moins partiellement par le perçage fileté (125).

2. Dispositif de connexion (1) selon la revendication 1, **caractérisé en ce que** le corps (121) est approximativement au moins de forme parallélépipédique ou au moins de forme conique vers le bas.

3. Dispositif de connexion (1) selon la revendication 1 ou 2, **caractérisé en ce que** le corps (121) est arrondi latéralement ou en bas.

4. Dispositif de connexion (1) selon la revendication 1, 2, ou 3 **caractérisé en ce que** la hauteur (h1) de la pièce médiane (1213) est sélectionnée de sorte que les deux pièces latérales (1211, 1212) soient maintenues parallèles entre elles.

5. Dispositif de connexion (1) selon l'une des revendications 1 à 4, **caractérisé en ce que** l'élément de retenue /12) est fabriqué d'une seule pièce en métal ou en matière plastique.

6. Dispositif de connexion (1) selon l'une des revendications 1 à 5, **caractérisé en ce qu'**il est prévu appliqué contre la tête (111) de la vis de connexion (11) un élément de fonction (13) avec une ouverture (131) à travers laquelle est guidée la tige filetée (112) de la vis de connexion (11).

7. Dispositif de connexion (1) selon l'une des revendications 1 à 6, **caractérisé en ce que** la face munie d'un perçage fileté (125) de l'élément de retenue (12) est rendue rugueuse ou présente des pointes (126) ou des crochets (127) maintenus élastiquement.
